# EUROPÄISCHE PATENTSCHRIFT

(11) **EP 1 012 545 B1**
(45) Veröffentlichungstag und Bekanntmachung des Hinweises auf die Patenterteilung: **01.06.2005**
(21) Anmeldenummer: 98950023.6
(22) Anmeldetag: 10.09.1998
(51) Int. Cl.: G01G 11/08

(54) **VERFAHREN UND VORRICHTUNG ZUR KONTINUIERLICHEN, GRAVIMETRISCHEN DOSIERUNG**
METHOD AND DEVICE FOR CONTINUOUS GRAVIMETRIC ASSAYING
PROCEDE ET DISPOSITIF DE DOSAGE GRAVIMETRIQUE CONTINU

(30) Priorität: 10.09.1997 DE 19739712
(43) Veröffentlichungstag der Anmeldung: 28.06.2000
(73) Patentinhaber: Pfister GmbH, 86165 Augsburg (DE)
(72) Erfinder: WOLFSCHAFFNER, Hubert, D-86453 Dasing (DE); WAGNER, Hubert, D-86482 Aystetten (DE); HÄFNER, Hans, Wilhelm, D-86551 Aichach-Walchshofen (DE)
(74) Vertreter: Fiener, Josef
(86) Internationale Anmeldenummer: PCT/EP1998/005784
(87) Internationale Veröffentlichungsnummer: WO 1999/013302

(56) Entgegenhaltungen:
- EP-A- 0 262 335
- DE-A- 4 443 053
- DE-B- 1 211 415
- DE-C- 3 514 910
- HAEFNER H W ET AL: "DOSIERROTORWAAGEN - DIE UNIVERSELLE LOESUNG" WAGEN UND DOSIEREN, Bd. 27, Nr. 6, November 1996, Seiten 26-34, XP000640440
- HAEFNER H W: "EINSATZ DER DOSIERROTORWAAGE ALS GRAVIMETRISCHES STELLGLIED BEI PROZESSFEUERUNGSANLAGEN" WAGEN UND DOSIEREN, Bd. 24, Nr. 3, 1. Mai 1993, Seiten 3-9, XP000361338

## Beschreibung

Die Erfindung betrifft ein Verfahren und eine Vorrichtung zur kontinuierlichen, gravimetrischen Dosierung und Massenstrombestimmung von fließfähigen Gütern mit einer Dosiervorrichtung, insbesondere einem Dosierrotor mit Feststellung des momentanen Massenstroms.

Eine derartige Anlage zum kontinuierlichen, gravimetrischen Fördern und/oder Dosieren von Schüttgütern ist aus der DE 40 23 948 A1 bekannt, wobei eine Dosierrotorwaage gemäß der DE 32 17 406 A1 bzw. der EP-A-0 198 956 Verwendung findet. Die einer Schüttgutzuführung folgende Dosiervorrichtung ist in einem geschlossenem pneumatischen Förderweg angeordnet und eine auf Kraftmeßzellen abgestütze Sammelvorrichtung mit einer Zellenradschleuse nachgeschaltet. Zur entsprechenden Regelung der gewünschten Fördermenge pro Zeiteinheit (Förderstärke) wird hierbei ein rechnergesteuertes, zentrales Dosiersteuersystem verwendet, wie es beispielsweise in der DE 32 17 406 A1 oder DE-A1-44 43 053 beschrieben ist, wobei das Wägesignal der Bunker-Wägezellen als Eingangssignal dient und die Drehzahl des Dosierrotors und gegebenenfalls der Zellenradschleuse für die Schüttgutzufuhr geregelt wird. Bis zur Einregelung auf die Soll-Förderstärke ist hierbei jedoch eine gewisse Regelungs-Totzeit gegeben.

Dieses Regelungssystem wird in der vorstehend genannten EP-A-0 198 956 näher beschrieben, wobei in der Dosierrotorwaage die momentan in der Rotorwägestrecke wirkende Schüttgutmasse erfaßt wird, aus der sich durch Multiplikation mit der Winkelgeschwindigkeit des Dosierrotors der Schüttgut-Massendurchsatz ergibt. Die Wägeelektronik verzögert hierbei die die Weitergabe des jeweiligen Gewichtswertes der sich momentan auf der Rotorwägestrecke (Meßstrecke) befindlichen Schüttgutmasse (Beladung) bis zu einem bestimmten Weitergabepunkt, so daß kurz vor dem Austrag des Schüttgutes in die pneumatische Förderleitung entsprechend der vorbestimmten Soll-Förderstärke die Rotorwinkelgeschwindigkeit variiert werden kann, also der Dosierrotor beschleunigt oder verzögert wird. Hierdurch ergibt sich eine relativ hohe Dosiergenauigkeit, die sich für die Dosierung von staubförmigen Schüttgütern, beispielsweise bei der Kohlenstaubdosierung bei Zementdrehrohröfen oder zur Dosierung von Additiven bei der Rauchgasreinigung allgemein bewährt hat.

Bei bestimmten Fördergütern, wie Additive zur Zumischung bei der Rauchgasreinigung von Kraftwerken, ist jedoch zu beachten, daß diese Schüttgüter abhängig vom Feuchtegrad, Fluidisierung, Feinheit und dergleichen zum "Schießen" oder auch zur Brückenbildung neigen können, so daß es bei der Schüttgutzufuhr zu zufälligen oder stark pulsierenden Massestromschwankungen (Beladungsunterschieden) kommen kann. In diesem Fall kann die vorher beschriebene Dosiervorrichtung aufgrund der Trägheit die kurzzeitigen Massestromschwankungen kaum mehr ausgleichen, da der Dosierrotor insbesondere bei der druckstoßfesten Ausführung eine erhebliche Eigenmasse von einigen hundert Kilogramm besitzt, so daß zur Konstanthaltung der Förderstärke bei stark schwankenden Massenströmen die erforderlichen Winkelgeschwindigkeitsänderungen, also eine starke Beschleunigung oder eine Verzögerung des Dosierrotors aufgrund der Massenträgheit kaum mehr möglich sind.

Diese Plus-/Minus-Schwankungen können in der erstgenannten Anlage zum Fördern und/oder Dosieren von Schüttgütern in Art einer Mittelwertbildung teilweise noch dadurch ausgeglichen werden, daß ein auf Kraftmeßzellen abgestützter Sammelbehälter vorgesehen ist. Ein solcher Ausgleichsbehälter erhöht jedoch den Bauaufwand und Platzbedarf erheblich.

Demzufolge liegt der Erfindung die Aufgabe zugrunde, ein Verfahren und eine Vorrichtung zur kontinuierlichen, gravimetrischen Dosierung und Massenstrombestimmung, insbesondere von Schüttgütern zu schaffen, mit dem bzw. mit der auf einfache Weise eine verbesserte Dosiergenauigkeit selbst bei stark schwankender Fördergutzufuhr erreicht wird.

Diese Aufgabe wird gelöst durch ein Verfahren gemäß den Merkmalen des Patentanspruches 1 bzw. durch eine Vorrichtung gemäß den Merkmalen des Patentanspruches 5.

Durch die Regulierung der Dosiervorrichtung und damit des Austrages zur Regelung der Förderstärke an einem aus der aktuellen Ist-Geschwindigkeit errechneten Vorsteuerpunkt und in direkter Abhängigkeit von dem an der Dosiervorrichtung festgestellten momentanen Massenstrom ergibt sich eine hochgenaue Störgrößenkompensation noch vor Übergabe des Schüttgutes an die Abgabestelle oder Prozeßanlage, so daß eine besonders hohe Kurzzeitdosiergenauigkeit erreicht wird. Dabei wird eine Regelung der Ist-Förderstärke auf den eingestellten Sollwert praktisch ohne Totzeit durchgeführt, da genau erfaßt wird, wann bzw. bei welchem Winkel die Massenabweichung an der Abgabestelle auftritt und dementsprechend durch Erhöhung oder Reduzierung der Fördergeschwindigkeit ausgeglichen werden kann. Dies ist insbesondere bei der Kohlenstaubdosierung zur Erreichung eines konstanten Verbrennungsprozesses oder bei der Rauchgasreinigung von Bedeutung. Diese Störgrößenkompensation bei der Dosierung noch vor Übergabe des Fördergutes in den chemischen oder thermischen Prozeß ermöglicht somit eine besonders hohe Kurzzeit-Dosiergenauigkeit in Art einer vorausschauenden Regelung, wobei insbesondere die Verwendung eines Dosierrotors eine hochgenaue Massenstrombestimmung über einen breiten Einstellbereich der Soll-Förderstärke erlaubt.

Bevorzugte Ausführungsformen sind Gegenstand der Unteransprüche, wobei insbesondere die Möglichkeit zur Kontrolle durch Messung der tatsächlich erreichten Ist-Geschwindigkeit an einem Kontrollpunkt und eine nachfolgende Korrektur von besonderem Vorteil ist, da hierdurch bleibende Regelabweichungen vermieden werden können.

Nachfolgend wird ein Ausführungsbeispiel anhand der Zeichnungen näher erläutert und beschrieben. Hierbei zeigen:
- Fig. 1: eine Schnittdarstellung durch eine Vorrichtung zur kontinuierlichen gravimetrischen Schüttgutdosierung mit einem Dosierrotor als Dosiervorrichtung;
- Fig. 2: eine schematische Draufsicht gemäß Fig. 1; und
- Fig. 3: eine Darstellung des bevorzugten Regelschemas gemäß Fig. 1 und Fig. 2 bei der Dosierung.

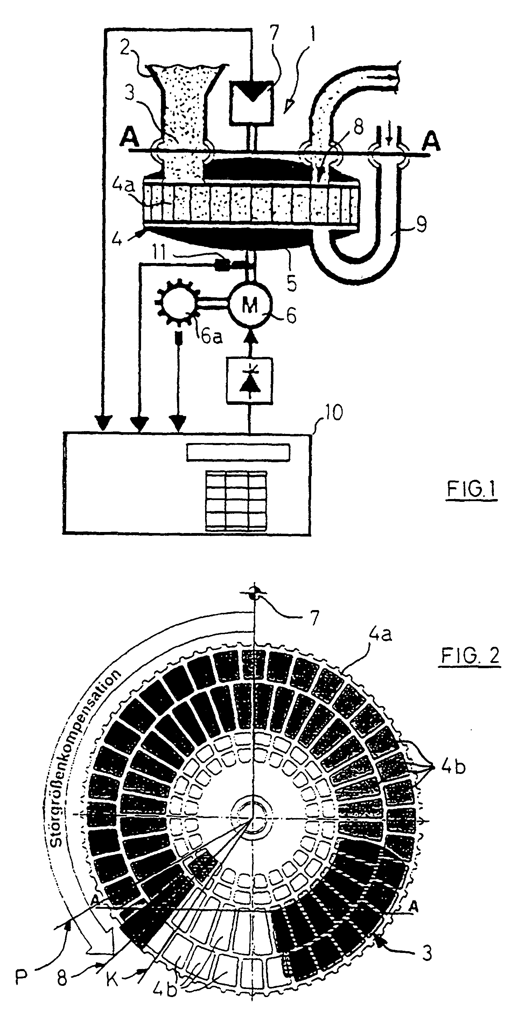

In Fig. 1 ist eine Vorrichtung 1 zur kontinuierlichen gravimetrischen Dosierung und Massenstrombestimmung dargestellt, wobei das entsprechend einer einstellbaren Soll-Förderstärke zu dosierende Fördergut, insbesondere ein rieselfähiges Schüttgut, aus einem Bunker oder Silo 2 mittels einer Zuführung 3 zugeführt wird. Das Fördergut gelangt dabei auf eine Dosiervorrichtung 4, die innerhalb eines Gehäuses 5 angeordnet ist und damit eine Meßstrecke über etwa 300° Umlaufwinkel (vgl. Fig. 2) bis zu einer Abgabestelle 8 definiert. Die Dosiervorrichtung 4 ist hierbei bevorzugt als Dosierrotor 4a ausgebildet, wie dies näher in der DE 32 17 406 A1 beschrieben ist. Dieser Dosierrotor 4a ist hierbei an einer seitlich von dem Gehäuse 5 geführten Schwenkachse A-A gelagert und durch einen drehzahlgeregelten Elektromotor als Antrieb 6 angetrieben. Das Gehäuse 5 des Dosierrotors 4a ist begrenzt schwenkbeweglich auf eine Kraftmeßzelle 7 abgestützt. Das Abstützmoment auf die seitlich von der Schwenkachse A-A beabstandet angeordnete Kraftmeßzelle 7 ist direkt proportional zu der Masse des durch die Meßstrecke des Dosierrotors 4a von der Zuführung 3 bis zur Abgabestelle 8 transportierten Materialstromes ist.

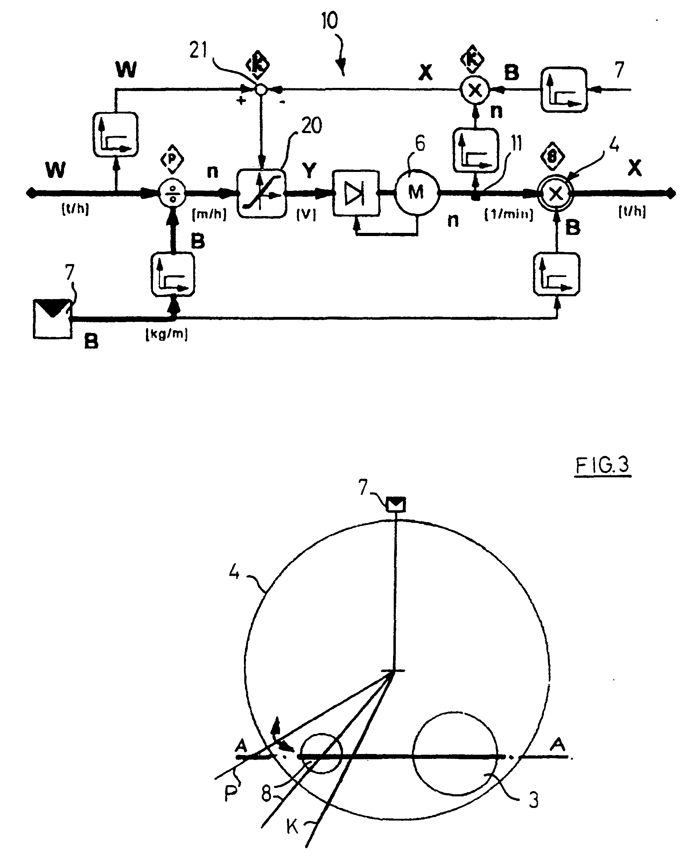

Am unteren Ende des Gehäuses 5 mündet zur Abgabestelle 8 hin eine Ausblasleitung 9. Die Kraftmeßzelle 7, ein auf der Rotorwelle vorgesehener Drehzahl-Sensor 11 und ein Tachogenerator 6a des Antriebs 6 sind mit einer elektronischen Dosiersteuerung 10 verbunden, die somit den momentanen Massenstrom X durch Multiplikation aus momentaner Beladung B und Drehzahl/Winkelgeschwindigkeit feststellen und in Beziehung zur eingestellten Soll-Förderstärke W setzt, sowie mit einem Stellwert Y den Antriebsmotor 6 des Dosierrotors 4a z.B. über einen Thyristor ansteuert, um die Drehzahl bzw. Winkelgeschwindigkeit zu variieren und damit die eingestellte Förderstärke konstant zu halten. Liegt an der Dosiervorrichtung 4 eine Minusabweichung der Beladung B vor (z. B. -0,2 %), so wird zur Konstanterhaltung der Förderstärke X die Winkelgeschwindigkeit des Dosierrotors 4a um den entsprechenden Wert angehoben, also hier um +0.2 %, wie dies durch den in stärkerer Linienbreite in Fig. 3 gezeigten Regelpfad an sich bekannt ist.

Von wesentlicher Bedeutung ist hierbei, daß durch die Bestimmung des Winkel-Abstandes für dem Vorsteuerpunkt P vor der Abgabestelle 8 (vgl. Fig. 2 und 3) geometrisch vorgegebene Bedingungen vorhanden sind, so daß von der Dosiersteuerung 10 genau berechnet werden kann, zu welchem Zeitpunkt die Störgröße (z. B. die Abweichung von -0,2 %) an der Abgabestelle 8 auftritt. Abhängig von der ebenfalls gemessenen Ist-Geschwindigkeit des Dosierrotors 4a läßt sich unter Berücksichtigung des Vorlaufwinkels von der Dosiervorrichtung 4 auf die entsprechende Tasche 4b des Dosierrotors 4a und der Umdrehungsgeschwindigkeit/Drehzahl eine genaue vorlauf-Zeitspanne bestimmen, nach der die Störgröße (Minusabweichung) nach Feststellung an der Kraftmeßzelle 7 dann an der Abgabestelle 8, d. h. der Einmündung in die Ausblasleitung 9 auftritt. Somit kann die Dosiersteuerung 10 zu diesem Zeitpunkt den entsprechenden Befehl unter Berücksichtigung des Trägheitsverhaltens des Dosierrotors 4a kurz vorher geben, die Drehzahl um z. B. 0,2 % zu erhöhen. Somit ist durch diese Vorrichtung 1 eine vorausschauende Regelung der Ist-Förderstärke praktisch ohne Totzeit möglich.

In Fig. 2 ist eine Draufsicht auf die Vorrichtung 1 gemäß Fig. 1 dargestellt, wobei insbesondere die taschenförmige Gestaltung des Dosierrotors 4a ersichtlich ist, ebenso die Anordnung der Abgabestelle 8 und des in Drehrichtung vorgelagerten Vorsteuerpunktes P, sowie ein nachgelagerter Kontrollpunkt K. In vorteilhafter Ausgestaltung kann hierbei zur weitgehenden Minimierung von Regelabweichungen die Ist-Geschwindigkeit durch den Drehzahl-Sensor 11 erfaßt werden und mit den zum Vorsteuerpunkt P angesteuerten Geschwindigkeitswert in einem Vergleicher 21 (vgl. Fig. 3 oberer Regelpfad) verglichen, sowie einem Integrator 20 mit langer Integrationszeit 20 zugeführt werden. Wenn beispielsweise der zum Vorsteuerpunkt P abgegebene Stellwert Y an den Antriebsmotor 6 aufgrund der Gesamtträgheit für die gewünschte Förderstärke nicht ausreichend war, kann durch Vorverlagerung des Vorsteuerpunktes P ( von hier etwa 20° auf z.B. 25° vor der Abgabestelle 8) die erforderliche Zeitspanne zum Beschleunigen/Bremsen des Dosierrotors 4a mit zeitgerechter Erreichung der angesteuerten Geschwindigkeit an der Abgabestelle 8 geschaffen werden und somit der Soll-Massenstrom W mit der Dosiervorrichtung 4 eingeregelt werden. Der Vorsteuerpunkt P sollte dabei so nah wie möglich am Abgabepunkt 8 liegen, so daß beschleunigungs/bremsstarke Antriebe 6 zweckmäßig sind.

In Fig. 3 ist ein Regelschema zur kontinuierlichen gravimetrischen Dosierung und Massenstrombestimmung an den in Förderrichtung aufeinanderfolgenden Positionen (in Rauten angedeutet) des Vorsteuerpunktes P, der Abgabestelle 8 und des Kontrollpunktes K dargestellt, wobei bei ansonsten ähnlichen Aufbau die Bauteile in Fig. 1 und Fig. 2 mit der Dosiersteuerung 10 verbunden sind, die die Austragsleistung X aus dem Gehäuse 5 der Dosiervorrichtung 4 in Abhängigkeit von dem durch die Dosiervorrichtung 4 festgestellten momentanen Massenstrom (Beladung B) steuert. Je nach momentaner Beladung B kann somit auch der Beginn bzw. Startpunkt der Drehzahlregulierung des Antriebsmotors 6 unter Berücksichtung des jeweiligen Trägheitsmomentes variiert werden, um die Soll-Förderstärke W einzuhalten. In der Dosiersteuerung 10 sind dabei auch die festen geometrische Parameter, wie Eigenmasse und Umfang des Dosierrotors 4a, Winkel zwischen Zentrum der Abgabestelle 8 und Kontrollstelle K gespeichert, so daß bei einer gemessenen Ist-Winkelgeschwindigkeit genaue Aussagen getroffen werden können, wann die von dem Dosiervorrichtung 4 festgestellte Beladung B an der Abgabestelle 8 eintrifft und somit eine entsprechende Nachregulierung durch Beschleunigung/Reduzierung der Fördergeschwindigkeit vorgenommen werden kann.

Obwohl hierbei als Dosiervorrichtung ein Dosierrotor 4a beschrieben wurde, kann das aufgezeigte Steuer-und Regelverfahren auch bei einer Dosierbandwaage oder einem Dosierschneckenförderer zur Erhöhung der Kurzzeit-Dosiergenauigkeit an der Abgabe- bzw. Abwurfstelle angewendet werden, da auch hier erhebliche Trägheitsmomente vorliegen können.

## Patentansprüche

1. Verfahren zur kontinuierlichen, gravimetrischen Dosierung und Massenstrombestimmung von fließfähigen Gütern mit einer Dosiervorrichtung, insbesondere einem Dosierrotor mit Feststellung des momentanen Massenstroms an einem Vorsteuerpunkt vor einer Abgabestelle, wobei die Austragssteuerung durch Änderung der Drehzahl der Dosiervorrichtung erfolgt,
**dadurch gekennzeichnet, daß**
der Abstand des Vorsteuerpunktes (P) vor der Abgabestelle (8) in Anpassung an die jeweilige Ist-Geschwindigkeit und/oder Beladung (B) der Dosiervorrichtung (4) festgelegt wird.

2. Verfahren nach Anspruch 1,
**dadurch gekennzeichnet, daß**
die Ist-Geschwindigkeit an der Abgabestelle (8) und/oder kurz danach an einem Kontrollpunkt (K) gemessen wird.

3. Verfahren nach Anspruch 2,
**dadurch gekennzeichnet, daß**
eine Abweichung zwischen der am Vorsteuerpunkt (P) eingestellten und der am Kontrollpunkt (K) gemessenen Ist-Geschwindigkeit bei einem der folgenden Geschwindigkeitssteuervorgänge am Vorsteuerpunkt (P) berücksichtigt wird.

4. Verfahren nach Anspruch 1 oder 2,
**dadurch gekennzeichnet, daß**
eine Abweichung zwischen der am Vorsteuerpunkt (P) eingestellten und der am Kontrollpunkt (K) gemessenen Ist-Geschwindigkeit in einer Dosiersteuerung (10) erfaßt und/oder abgespeichert wird und mit der Soll-Geschwindigkeit in Beziehung gesetzt/verglichen wird.

5. Vorrichtung zur kontinuierlichen, gravimetrischen Dosierung und Massenstrombestimmung von fließfähigen Gütern mit einer Dosiervorrichtung (4), insbesondere einem Dosierrotor mit Feststellung des momentanen Massenstroms an einem Vorsteuerpunkt (P) vor einer Abgabestelle (8), wobei die Austragssteuerung durch Änderung der Drehzahl der Dosiervorrichtung (4) erfolgt, sowie die Dosiervorrichtung (4) mit einer die Ist-Geschwindigkeit erfassenden Dosiersteuerung (10) verbunden ist und der Austrag an der Abgabestelle (8) in Abhängigkeit von Massenstrom-Abweichungen an der Dosiervorrichtung (4) durch Änderung der Drehzahl der Dosiervorrichtung (4) regelbar ist,
**dadurch gekennzeichnet, daß**
der Abstand des Vorsteuerpunktes (P) vor der Abgabestelle (8) in Anpassung an die jeweilige Ist-Geschwindigkeit und/oder Beladung (B) der Dosiervorrichtung (4) festlegbar ist.

6. Vorrichtung nach Anspruch 5,
**dadurch gekennzeichnet, daß**
die Dosiervorrichtung (4) als Dosierrotor (4a) ausgebildet ist.

7. Vorrichtung nach Anspruch 6,
**dadurch gekennzeichnet, daß**
der Antrieb (6) des Dosierrotors (4a) einen Drehzahlsensor (11) zur Erfassung der Ist-Geschwindigkeit aufweist.

8. Vorrichtung nach Anspruch 6,
**dadurch gekennzeichnet, daß**
die Eigenmasse und die jeweilige Beladung (B) des Dosierrotors (4a) in der Dosiersteuerung (10) erfaßt ist.

9. Vorrichtung nach einem der Ansprüche 5 bis 8,
**dadurch gekennzeichnet, daß**
die Dosiersteuerung (10) wenigstens eine Integrationsschaltung (20) aufweist, die eine ggf. auftretende Abweichung an einem Kontrollpunkt (K) an oder kurz nach der Abgabestelle (8) erfaßt und den Stellwert (Y) der Dosiersteuerung (10) entsprechend korrigiert.

10. Vorrichtung nach Anspruch 9,
**dadurch gekennzeichnet, daß**
ein Vergleicherbaustein (21) zur Lageänderung des Vorsteuerpunktes (P) vorgesehen ist.

## Claims

1. Method for continuous gravimetric assaying and mass flow determination of flowable materials, with a metering device, especially a metering rotor with determination of the instantaneous mass flow at an anticipatory control point ahead of a delivery point, wherein the control over discharge is effected by altering the speed of rotation of the metering device,
**characterized in that**
the distance of the anticipatory control point (P) ahead of the delivery point (8) is determined to match the current actual speed and/or loading (B) of the metering device (4).

2. Method according to claim 1,
**characterized in that**
the actual speed at the delivery point (8) and/or shortly thereafter at a monitoring point (K) is measured.

3. Method according to claim 2,
**characterized in that**
a deviation between the actual speed set at the anticipatory control point (P) and measured at the monitoring point (K) is taken into account in one of the following speed control operations at the anticipatory control point (P).

4. Method according to claim 1 or 2,
**characterized in that**
a deviation between the actual speed set at the anticipatory control point (P) and that measured at the monitoring point (K) is detected and/or stored in a metering controller (10) and is placed/compared in relation to the set-point speed.

5. Apparatus for continuous, gravimetric assaying and mass flow determination of flowable materials, with a metering device (4), especially a metering rotor with determination of the instantaneous mass flow at an anticipatory control point (P) ahead of a delivery point (8), wherein the control over discharge is effected by altering the speed of rotation of the metering device (4), and wherein the metering device (4) is connected to a metering controller (10) detecting the actual speed and the discharge at the delivery point (8) can be regulated in dependence on mass flow deviations at the metering device (4) by altering the speed of rotation of the metering device (4),
**characterized in that**
the distance of the anticipatory control point (P) ahead of the delivery point (8) is determined to match the current actual speed and/or loading (B) of the metering device (4).

6. Apparatus according to claim 5,
**characterized in that**
the metering device (4) is in the form of a metering rotor (4a).

7. Apparatus according to claim 6,
**characterized in that**
the drive means (6) of the metering rotor (4a) comprises a speed of rotation sensor (11) for detecting the actual speed.

8. Apparatus according to claim 6,
**characterized in that**
the own mass and the current loading (B) of the metering rotor (4a) are detected in the metering controller (10).

9. Apparatus according to any of claims 5 to 8,
**characterized in that**
the metering controller (10) comprises at least one integrating circuit (20), which detects a deviation possibly occurring at a monitoring point (K) at or shortly after the delivery point (8) and corrects the control value (Y) of the metering controller (10) correspondingly.

10. Apparatus according to claim 9,
**characterized in that**
a comparison module (21) is provided for altering the position of the anticipatory control point (P).

## Revendications

1. Procédé pour le dosage gravimétrique en continu et la détermination du débit de masse de marchandises fluides avec un dispositif doseur, en particulier un rotor doseur avec détermination du débit de masse instantané au niveau d'un point de pré-régulation avant un point de sortie, dans lequel la régulation de l'extraction est effectuée par modification de la vitesse de rotation du dispositif doseur, **caractérisé en ce que** la distance entre le point de pré-régulation (P) et le point de sortie (8) est déterminée en fonction de la vitesse réelle et /ou de la charge (B) du dispositif doseur (4).

2. Procédé selon la revendication 1, **caractérisé en ce que** la vitesse réelle au point de sortie (8) et/ou peu avant celui-ci est mesurée en un point de contrôle (K).

3. Procédé selon la revendication 2, **caractérisé en ce qu'**un écart entre la vitesse réelle réglée au point de pré-régulation (P) et mesurée au point de contrôle (K) est pris en compte dans l'une des opérations de régulation de la vitesse subséquentes point de pré-régulation (P).

4. Procédé selon la revendication 1 ou 2, **caractérisé en ce qu'**un écart entre la vitesse réelle réglée au point de pré-régulation (P) et mesurée au point de contrôle (K) est capté et/ou mémorisé dans une commande de dosage (10) et mis en relation ou comparé avec la vitesse de consigne.

5. Dispositif pour le dosage gravimétrique en continu et la détermination du débit de masse de marchandises fluides avec un dispositif doseur (4), en particulier un rotor doseur avec détermination du débit de masse instantané au niveau d'un point de pré-régulation (P) avant un point de sortie (8), dans lequel la régulation de l'extraction est effectuée par modification de la vitesse de rotation du dispositif doseur (4), et le dispositif doseur (4) communique avec une commande de dosage (10) qui détecte la vitesse réelle et la sortie au point de sortie (8) peut être régulée en fonction des différences de débit de masse au niveau du dispositif doseur (4) par modification de la vitesse de rotation du dispositif doseur (4), **caractérisé en ce que** la distance entre le point de pré-régulation (P) et le point de sortie (8) peut être déterminée en fonction de la vitesse réelle et/ou de la charge (B) du dispositif doseur (4).

6. Dispositif selon la revendication 5, **caractérisé en ce que** le dispositif doseur (4) est conformé comme un rotor doseur (4a).

7. Dispositif selon la revendication 6, **caractérisé en ce que** l'entraînement (6) du rotor doseur (4a) comprend un capteur de vitesse de rotation (11) destiné à détecter la vitesse réelle.

8. Dispositif selon la revendication 6, **caractérisé en ce que** la masse propre et la charge (B) du rotor doseur (4a) sont captées par la commande de dosage (10).

9. Dispositif selon l'une quelconque des revendications 5 à 8, **caractérisé en ce que** la commande de dosage (10) comprend au moins un circuit d'intégration (20) qui détecte un écart éventuel en un point de contrôle (K) ou au niveau du point de sortie (8) ou peu avant celui-ci et corrige en conséquence la valeur de réglage (Y) de la commande de dosage (10).

10. Dispositif selon la revendication 9, **caractérisé en ce qu'**il est prévu un composant comparateur (21) pour modifier la position du point de pré-régulation (P).
